# EUROPEAN PATENT SPECIFICATION

(11) **EP 2 108 025 B1**
(45) Date of publication and mention of the grant of the patent: **26.02.2014**
(21) Application number: 07860767.8
(22) Date of filing: 28.12.2007
(51) Int. Cl.: C08L 69/00

(54) **POLYCARBONATE-POLYSILOXANE COPOLYMER RESIN COMPOSITION WITH HIGH IMPACT STRENGTH AT LOW TEMPERATURE AND MECHANICAL STRENGTH**
POLYCARBONAT-POLYSILOXAN-COPOLYMERHARZZUSAMMENSETZUNG MIT HOHER KÄLTESCHLAGZÄHIGKEIT UND MECHANISCHER FESTIGKEIT
COMPOSITION DE RÉSINE DE COPOLYMÈRE DE POLYCARBONATE-POLYSILOXANE À RÉSISTANCE AUX CHOCS ÉLEVÉE À BASSE TEMPÉRATURE ET À RÉSISTANCE MÉCANIQUE

(30) Priority: 29.12.2006 KR 20060138052
(43) Date of publication of application: 14.10.2009
(73) Proprietor: CHEIL INDUSTRIES INC., Gumi-si, Gyeongsangbuk-do 730-710 (KR)
(72) Inventor: KIM, Bo Young, Seoul 156-095 (KR); KANG, Tae Gon, Suwon-si, Gyeonggi-do 442-190 (KR); LIM, Jong Cheol, Uiwang-si, Gyeonggi-do 437-711 (KR)
(74) Representative: Bublak, Wolfgang
(86) International application number: PCT/KR2007/006990
(87) International publication number: WO 2008/082220

(56) References cited:
- WO-A1-01/05870
- KR-A- 830 007 755
- US-A- 5 194 524
- US-B1- 6 416 817

## Description

### Technical Field

The present invention relates to a polycarbonate-polysiloxane resin composition with high impact strength at low temperature and high mechanical strength. More particularly, the present invention relates to a polycarbonatepolysiloxane resin composition which comprises a polycarbonate resin and an organic siloxane polymer having a primary amine group.

### Background Art

Polycarbonate-polysiloxane copolymers and methods for preparing the same have been widely studied for many years.

In general, polycarbonate-polysiloxane copolymers have been prepared by interfacial polymerization. U.S. Patent No. 5,530,083 discloses a method for preparing a silicone polycarbonate block copolymer using an interfacial phosgenation reaction in which an aromatic dihydroxy compound, phosgene and a catalyst are reacted with a hydroxyaryl terminated polydiorganosiloxane. However, this method has the problem of using a chlorinated solvent that is harmful to the environment.

U.S. Patent No. 4,994,532 discloses a process of preparing a polycarbonate-silicone block copolymer by melt-blending a polycarbonate resin and a polydimethylsiloxane having a functional carboxylic acid group.

In addition, U.S. Patent No. 5,194,524 discloses a process for producing a copolymer by melt-mixing siloxane compounds having at least one secondary amine group and polycarbonate resins through a conventional extruder. According to the above-mentioned patent, the polysiloxane having the secondary amine functional group is more effective for the reactive extrusion than a polysiloxane having a primary amine, due to relatively low hydrolytic stability of primary amine. The method using a melt mixing process has some advantages of proceeding in a conventional melt extruder and being a simple process, however, the method also has the problems of low impact strength at low temperature and low mechanical strength.

Accordingly, in order to solve those problems, the present inventors have developed a polycarbonate-polysiloxane copolymer resin composition with high impact strength at low temperature as well as high mechanical strength and a method for preparing the same by introducing an organic siloxane polymer having a primary amine group to a polycarbonate resin.

### Disclosure of Invention

### Technical Problem

An object of the present invention is to provide a polycarbonate-polysiloxane resin composition with high impact strength at low temperature and high mechanical strength.

Another object of the present invention is to provide a polycarbonate-polysiloxane resin composition having a good balance of physical properties such as impact resistance, thermal stability, workability and appearance.

Other objects and advantages of this invention will be apparent from the ensuing disclosure and appended claims.

### Technical Solution

The polycarbonate-polysiloxane resin composition according to the present invention comprises (A) about 100 parts by weight of a thermoplastic polycarbonate resin and (B) 0.1 to 30 parts by weight of an organic siloxane polymer having a primary amine group.

In an exemplary embodiment of the invention, the polycarbonate-polysiloxane resin composition has an impact strength of about 343.2 N·cm/cm (35 kgf·cm/cm) or more measured at 23 °C for 6.35 mm (1/4") specimens in accordance with ASTM D-256, an impact strength of about 176.5 N·cm/cm (18 kgf·cm/cm) or more at -20 °C and about 147.1 N·cm/cm (15 kgf·cm/cm) or more at -30 °C measured in accordance with ASTM D-256 for 6.35 mm (1/4") specimens, respectively, and a flexural modulus of about 205,940 N/cm² (21,000 kgf/cm²) or more measured in accordance with ASTM D790 using a 6.35 mm (1/4") thick test specimens.

The resin composition may further comprise an impact modifier to improve the impact strength. The preferable impact modifier may be present in the composition in an amount of less than about 10 parts by weight.

In an exemplary embodiment of the invention, the impact modifier is a core-shell graft copolymer.

In the exemplary embodiment, the polycarbonate-polysiloxane resin composition has an impact strength of about 686.5 N·cm/cm (70 kgf·cm/cm) or more measured at 23 °C for 6.35 mm (1/4") specimens in accordance with ASTM D-256, an impact strength of about 539.4 N·cm/cm (55 kgf·cm/cm) or more at -20 °C and about 333.4 N·cm/cm (34 kgf·cm/cm) or more at -30 °C measured in accordance with ASTM D-256 for 6.35 mm (1/4") specimens, respectively, and a flexural modulus of about 205,940 N/cm² (21,000 kgf/cm²) or more measured in accordance with ASTM D790 using a 6.35 mm (1/4") thick test specimens.

In another exemplary embodiment of the invention, the impact modifier is an ethylene/alkyl (meth) acrylate copolymer.

The resin composition of the invention may further include additives selected from the group consisting of flame retardants, flame retardant aids, lubricants, releasing agents, nucleating agents, antistatic agents, stabilizers, modifiers, inorganic fillers, pigments, dyes, and mixtures thereof.

Another aspect of the present invention relates to a method for preparing a polycarbonate-polysiloxane copolymer. The method comprises melt-blending a thermoplastic polycarbonate resin and an organic siloxane polymer having a primary amine group and extruding the melt-blended mixture through an extruder.

The copolymer of the present invention now will be described more fully hereinafter in the following detailed description of the invention.

### Best Mode for Carrying Out the Invention

### (A) Polycarbonate Resin

The polycarbonate resin of the present invention is prepared by reacting a diphenol represented by the following Chemical Formula 1 with a phosgene, a halogen formate or a carbonic diester.

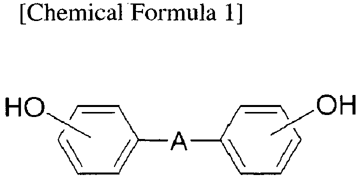

wherein A is a single bond, a C₁₋₅ alkylene group, a C₁₋₅ alkylidene group, a C₅₋₆ cycloalkylidene group, -S- or -SO₂.

Examples of the diphenol shown in Chemical Formula 1 may include 4, 4'-dihydroxydiphenyl, 2,2-bis-(4-hydroxyphenyl)-propane, 2,4-bis-(4-hydroxyphenyl)-2-methylbutane,1,1-bis-(4-hydroxyphenyl)-cyclohexane, 2,2-bis-(3-chloro-4-hyroxyphenyl)-propane, 2,2-bis-(3,5-dichloro-4-hydroxyphenyl)-propane and the like.

Preferable examples of diphenols are 2,2-bis-(4-hydroxyphenyl)-propane, 2,2-bis-(3,5-dichloro-4-hydroxyphenyl)-propane, and 1,1-bis-(4-hydroxyphenyl)-cyclohexane. The most preferable diphenol is 2,2-bis-(4-hydroxyphenyl)-propane called 'bisphenol A' commonly used in industry as an aromatic.

In the present invention, it is preferable that the polycarbonate resin has a weight average molecular weight (Mw) of about 10,000 to about 500,000, more preferably about 25,000 to about 100,000.

In accordance with various embodiments of the invention, suitable polycarbonates incorporated into the composition of the present invention may be branched in a known manner, in particular, preferably by incorporating about 0.05 to about 2 mol%, based on the total quantity of diphenols used, of tri- or higher functional compounds, for example, those with three or more phenolic groups.

A homopolymer of polycarbonate, a copolymer of polycarbonate, or mixtures thereof may be used in the preparation of resin composition of the present invention.

### (B) Organic Siloxane Polymer Having a Primary Amine Group

The organic siloxane polymer of the present invention is the organic siloxane polymer containing a primary amine group represented by the following Chemical Formula 2.

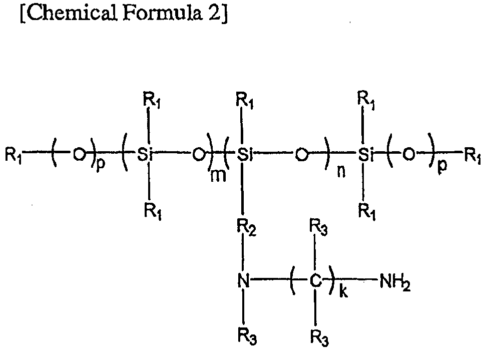

wherein R is independently a hydrogen atom, a C₁₋₈ alkyl group, a C₆₋₃₀ aryl group, or a C₁₋₁₅ alkyl-substituted C₆₋₃₀ aryl group; R₂ is a C₁₋₈ alkylene group; R₃ is independently a hydrogen atom, a C₁₋₈ alkyl group, a C₆₋₃₀ aryl group, or a C₁₋₁₅ alkylsubstituted C₆₋₃₀ aryl group; p is 0 or 1; k is an integer from of 1 to 5.

Preferably R₁ and R₃ are independently a hydrogen atom or a C₁₋₈ alkyl group. More preferably, R₁ and R₃ may include a hydrogen atom, methyl, ethyl, propyl, isopropyl, butyl, sec-butyl, t-butyl, isobutyl, isoamyl, t-amyl, etc.

Preferably R₂ is methylene, ethylene, propylene, isopropylene, butylene, sec-butylene or t-butylene.

The organic siloxane polymer containing a primary amine group may include, but is not limited to, a secondary amine group as shown in Chemical Formula 2.

In the above, m and n represent the ratio of repeating units, m : n is 99.9 : 0.1 to 50 : 50, preferably 99.5 : 0.5 to 55 : 45.

The viscosity of the organic siloxane polymer having a primary amine group used in the preparation of the resin composition may be, but is not limited to, 1∼100,000 mm²/s (cSt) at 25 °C, more preferably 10∼80,000 mm²/s (cSt) considering the workability.

The organic siloxane polymer having a primary amine group (B) of the present invention is used in an amount of 0.1∼30 parts by weight, preferably 0.2∼20 parts by weight, more preferably 0.5∼15 parts by weight. In those ranges, good physical properties mechanically may be obtained.

### (C) Impact Modifier

In embodiments, a conventional impact modifier may be optionally used to improve the impact strength.

In exemplary embodiments of the invention, the impact modifier may be a core-shell graft copolymer.

The core-shell graft copolymer can be prepared by grafting the rubber polymer with a monomer such as aromatic vinyl compound, cyanide vinyl compound, C₁-C₈ (meth) acrylic acid alkyl ester, maleic anhydride, maleimide, or mixtures thereof.

The core-shell graft copolymer may be preferably prepared by graft copolymerizing 5 to 95 % by weight of at least one monomer selected from the group consisting of styrene, α-methylstyrene, halogen- or C₁-C₈ alkyl-substituted styrene, C₁-C₈ methacrylic acid alkyl ester, C₁-C₈ acrylic acid alkyl ester, acrylonitrile, methacrylonitrile, maleic anhydride, C₁-C₄ alkyl- or phenyl N-substituted maleimide and mixtures thereof onto 5 to 95 % by weight of a rubber polymer selected from the group consisting of butadiene rubber, acrylic rubber, ethylene/propylene rubber, styrene/ butadiene rubber, acrylonitrile/butadiene rubber, isoprene rubber, ethylene-propylene-diene terpolymer (EPDM), polyorganosiloxane/polyalkyl(meth)acrylate rubber complex and mixtures thereof.

The C₁-C₈ methacrylic acid alkyl ester or C₁-C₈ acrylic acid alkyl ester can be obtained from a methacrylic acid or an acrylic acid respectively and a monohydric alcohol containing 1 to 8 carbon atoms. Examples of the acid alkyl ester may include methacrylic acid methyl ester, methacrylic acid ethyl ester, acrylic acid ethyl ester, acrylic acid methyl ester or methacrylic acid propyl ester.

One embodiment of the core-shell graft impact modifier is a graft copolymer obtained by graft polymerizing a mixture of styrene, acrylonitrile and optionally (meth) acrylic acid alkyl ester onto butadiene rubber, acrylic rubber, or styrene/butadiene rubber.

Another embodiment of the core-shell graft impact modifier is a graft copolymer obtained by graft polymerizing (meth)acrylic acid alkyl ester monomer onto the rubber mixture of polyorganosiloxane/polyalkyl (meth) acrylate rubber with butadiene rubber, acrylic rubber, and styrene/butadiene rubber.

The rubber polymer may have preferably an average particle size of about 0.05∼4 □ considering the impact strength and the appearance of a molded article.

The graft impact modifier according to the present invention can be prepared through a conventional polymerization process such as emulsion polymerization, suspension polymerization, solution polymerization, or bulk polymerization. Among these processes, emulsion or bulk polymerization in which said monomers are added to the rubber polymer using an initiator is preferable.

In another embodiment of the invention, the impact modifier may be a linear impact modifier, for example, an ethylene/alkyl (meth) acrylate copolymer.

The ethylene/alkyl (meth) acrylate copolymer may be represented by the following Chemical Formula 3.

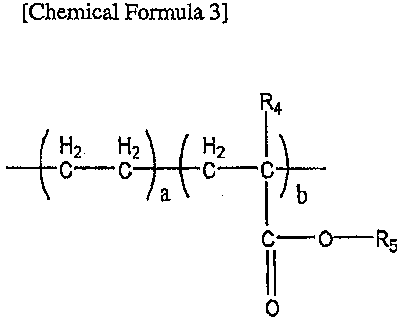

wherein R₄ is a hydrogen atom or a methyl group; R₅ is a C₁-C₁₂ alkyl group, a and b are the degree of polymerization, and a : b is 300 : 1 to 10 : 90.

Preferably, R₅ is methyl, ethyl, propyl, isopropyl, butyl, sec-butyl, t-butyl, isobutyl, isoamyl, or t-amyl.

The ethylene/alkyl (meth) acrylate copolymer may be a random copolymer, a block copolymer, a multiblock copolymer, a graft copolymer, or mixtures thereof. The ethylene/alkyl (meth) acrylate copolymer may be prepared by one of ordinary skill in the art.

In the present invention, the core-shell graft copolymer and the ethylene/ alkyl(meth)acrylate copolymer can be mixed together.

The impact modifier according to the invention comprises favorably about 10 parts by weight or less in the aspect of mechanical strength, more preferably 0.1 to 7 parts by weight, most preferably 0.5 to 5.5 parts by weight.

Polycarbonate-polysiloxane resin composition of the invention may further comprise conventional additives such as flame retardant, flame retardant aids, lubricants, releasing agents, nucleating agents, antistatic agents, stabilizers, modifiers, inorganic fillers, pigments, dyes, etc. These additives can be used alone or in combination with one another. The inorganic additives may be present in the composition in an amount of about 0 to about 60 parts by weight, preferably about 1 to about 40 parts by weight, per 100 parts by weight of the base resin of (A) and (B).

The polycarbonate-polysiloxane of the invention may be prepared by melt-blending a thermoplastic polycarbonate resin and an organic siloxane polymer having a primary amine group and extruding the melt-blended mixture. The mixture is extruded at about 200∼300 °C, preferably about 250∼280 °C. Extruded products can be prepared in the form of pellets. The pellets can be prepared by a conventional process and can be molded into the interior/exterior parts of electric and electronic goods such as TV housings, washing machines, telephones, audio sets, video players, CD players, and the like.

The invention may be better understood by reference to the following examples which are intended for the purpose of illustration and are not to be construed as in any way limiting the scope of the present invention, which is defined in the claims appended hereto.

### Mode for the Invention

### Examples

The compound specifications of (A) the polycarbonate resin, (B) the organic siloxane polymer containing a primary amine group, and (C) the impact modifier used in Examples and Comparative Examples will be described more fully hereinafter.

### (A) Polycarbonate Resin

Bisphenol-A based polycarbonate with a weight average molecular weight of 25,000 (Mw) was used.

### (B) Organic Siloxane Polymer Containing a Primary Amine Group

(B-1) The organic siloxane polymer having a dynamic viscosity of 1,000 mm²/s (cSt) at 25 °C and represented by the above Chemical Formula 2 in which the. ratio of m to n is 98.7 : 1.3; R₁ is methyl group; R₂ is propylene; R₃ is hydrogen atom; p is 0; k is 2 was used.
(B-2) polydimethylsiloxane having a dynamic viscosity of 100 mm²/s (cSt) at 25 °C manufactured by Shinetsu Co. of Japan (KF-96) was used.
(B-3) Siloxane polymer containing a secondary amine group represented by the following Chemical Formula 4 was used.

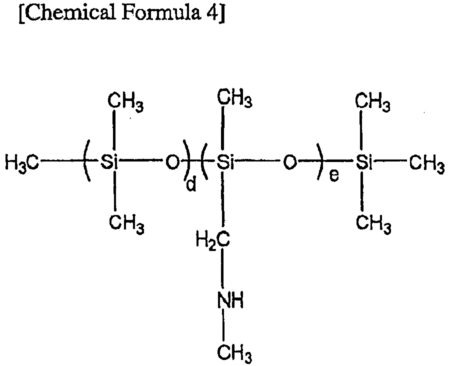

(d : e is 98 :2 and the dynamic viscosity is 1,000 mm²/s (cSt) at 25 °C)

### (C) Impact Modifier

MBS based core-shell graft impact modifier (Metablen C223A) manufactured by MRC Co. of Japan was used.

### Examples 1∼2 and Comparative Examples 1∼4

The components as shown in Table 1 added with antioxidants, thermal stabilizers were mixed in a conventional mixer and the mixture was extruded through a twin screw extruder (L/D=35, Φ=45 mm) in pellets. The resin pellets were molded into test specimens using a 10 oz injection molding machine at 280∼300 °C.

The physical properties of the test specimens were measured as follow and were shown in Table 1 below.
(1) Izod Impact Strength at room temperature: The notch Izod impact strength was measured for 6.35 mm (1/4") specimens (inch, kgf·cm/cm), after exposure at 23 °C and 50 % of relative humidity for 48 hours in accordance with ASTM D-256.
(2) Izod Impact Strength at low temperature: The notch Izod impact strength was measured for 6.35 mm (1/4") specimens (inch, kgf·cm/cm), after exposure at -20 °C and at -30 °C respectively for 48 hours in accordance with ASTM D-256.
(3) Flexural Modulus: The flexural modulus was measured after exposure at 23 °C and 50 % of relative humidity for 48 hours in accordance with ASTM D790 using a 6.35 mm (1/4") thick test specimens at 2.8 mm/min velocity.

**Table 1**

| | | | Examples | | Comparative Examples | | | |
|---|---|---|---|---|---|---|---|---|
| | | | 1 | 2 | 1 | 2 | 3 | 4 |
| Contents (parts by weight) | (A) polycarbonate resin | | 100 | 100 | 100 | 100 | 100 | 100 |
| | (B)organic siloxane | B-1 | 1.5 | 1.5 | - | - | - | - |
| | | B-2 | - | - | 1.5 | - | 1.5 | 3 |
| | | B-3 | - | - | - | 1.5 | - | - |
| | (C)impact modifier | | - | 1.5 | - | - | 1.5 | 1.5 |
| physical properties | notch impact strength at 23 °C (6.35 mm (1/4"), N·cm/cm (kgf·cm/cm)) | | 362.8 (37) | 735.5 (75) | 255.0 (26) | 264.8 (27) | 657.0 (67) | 745.3 (76) |
| | notch impact strength at -20 °C (6.35 mm (1/4"), N·cm/cm (kgf·cm/cm)) | | 196.1 (20) | 559.0 (57) | 127.5 (13) | 137.3 (14) | 470.7 (48) | 509.9 (52) |
| | notch impact strength at -30 °C (6.35 mm (1/4"), N·cm/cm (kgf·cm/cm)) flexural modulus (N/cm² (kgf/cm²)) | | 176.5 (18) | 353.0 (36) | 98.1 (10) | 117.7 (12) | 274.6 (28) | 323.6 (33) |
| | | | 213,785 (21,800) | 207,901 (21,200) | 200,056 (20,400) | 194,172 (19,800) | 183,384 (18,700) | 176,520 (18,000) |

As shown in Table 1, Examples 1-2 employing the organic siloxane polymer containing a primary amine group show high impact strength at low temperature and high mechanical strength, compared to Comparative Examples 1-4 employing the organic siloxane polymer without the functional group or the organic siloxane polymer substituted for a secondary amine group.

## Claims

1. A polycarbonate-polysiloxane resin composition with high impact strength at low temperature and high mechanical strength, comprising:
(A) about 100 parts by weight of a thermoplastic polycarbonate resin; and
(B) 0.1∼30 parts by weight of an organic siloxane polymer having a primary amine group.

2. The polycarbonate-polysiloxane resin composition of claim 1, wherein said organic siloxane polymer having a primary amine group (B) is represented by following Chemical Formula 2: 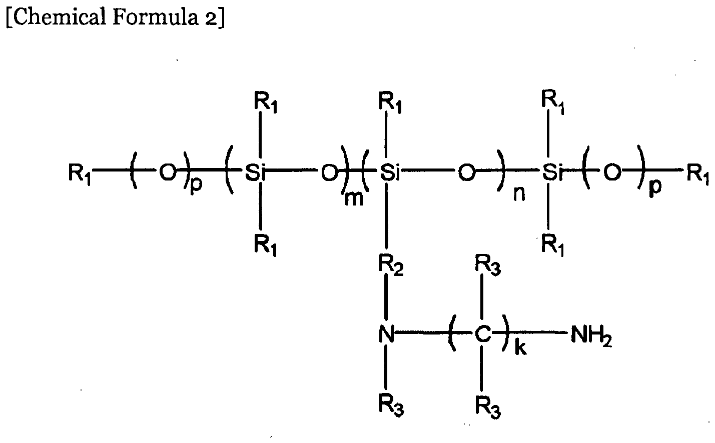
wherein R₁ is independently a hydrogen atom, a C₁₋₈ alkyl group, a C₆₋₃₀ aryl group, or a C₁₋₁₅ alkyl-substituted C₆₋₃₀ aryl group; R₂ is a C₁₋₈ alkylene group; R₃ is independently a hydrogen atom, a C₁₋₈ alkyl group, a C₆₋₃₀ aryl group, or a C₁₋₁₅ alkyl-substituted C₆₋₃₀ aryl group; p is 0 or 1; k is an integer from 1 to 5; m and n are repeating units, and m : n is 99.9 : 0.1 to 50 : 50.

3. The polycarbonate-polysiloxane resin composition of claim 2, wherein R₁ and R₃ of said organic siloxane polymer having a primary amine group (B) are independently a hydrogen atom, methyl, ethyl, propyl, isopropyl, butyl, sec-butyl, t-butyl, isobutyl, isoamyl, or t-amyl, and R₂ is methylene, ethylene, propylene, isopropylene, butylene, sec-butylene, or t-butylene.

4. The polycarbonate-polysiloxane resin composition of claim 2, the ratio of m to n of said organic siloxane polymer having a primary amine group is 99.5 : 0.5 to 55 : 45.

5. The polycarbonate-polysiloxane resin composition of claim 1, wherein said polycarbonate-polysiloxane resin composition has an impact strength of about 343.2 N·cm/cm (35 kgf·cm/cm) or more at 23 °C measured in accordance with ASTM D-256 using a 6.35 mm (1/4") thick test specimens, an impact strength of about 176.5 N·cm/cm (18 kgf·cm/cm) or more at -20 °C and about 147.1 N·cm/cm (15 kgf·cm/cm) or more at -30 °C measured in accordance with ASTM D-256 using a 6.35 mm (1/4") thick test specimens, and a flexural modulus of about 205,940 N/cm² (21,000 Kgf/cm²) or more measured in accordance with ASTM D790 using a 6.35 mm (1/4") thick test specimens.

6. The polycarbonate-polysiloxane resin composition of claim 1, further comprising about 10 or less parts by weight of the impact modifier (C).

7. The polycarbonate-polysiloxane resin composition of claim 6, wherein said impact modifier (C) is a core-shell graft copolymer prepared by grafting the rubber polymer with a monomer selected from the group consisting of aromatic vinyl compound, cyanide vinyl compound, C₁-C₈ (meth)acrylic acid alkyl ester, maleic anhydride, maleimide, and mixtures thereof.

8. The polycarbonate-polysiloxane resin composition of claim 7, wherein said core-shell graft copolymer is a graft copolymer prepared by graft copolymerizing 5 to 95 % by weight of at least one monomer selected from the group consisting of styrene, α-methylstyrene, halogen- or C₁-C₈ alkyl-substituted styrene, C₁-C₈ methacrylic acid alkyl ester, C₁-C₈ acrylic acid alkyl ester, acrylonitrile, methacrylonitrile, maleic anhydride, and C₁-C₄ alkyl- or phenyl N-substituted maleimide and mixtures thereof onto 5 to 95 % by weight of a rubber polymer selected from the group consisting of butadiene rubber, acrylic rubber, ethylene/propylene rubber, styrene/butadiene rubber, acrylonitrile/butadiene rubber, isoprene rubber, ethylene-propylene-diene terpolymer (EPDM), polyorganosiloxane/polyalkyl(meth)acrylate rubber complex and mixtures thereof.

9. The polycarbonate-polysiloxane resin composition of claim 8, wherein said polycarbonate-polysiloxane resin composition has an impact strength of about 686.5 N·cm/cm (70 kgf·cm/cm) or more as measured at 23 °C in accordance with ASTM D-256 using a 6.35 mm (1/4") thick test specimens, an impact strength of about 539.4 N·cm/cm (55 kgf·cm/cm) or more at -20 °C and about 333.4 N·cm/cm (34 kgf·cm/cm) or more at -30 °C in accordance with ASTM D-256 using a 6.35 mm (1/4") thick test specimens, and a flexural modulus of about 205,940 N·cm² (21,000 Kgf/cm²) or more as measured in accordance with ASTM D790 using a 6.35 mm (1/4") thick test specimens.

10. The polycarbonate-polysiloxane resin composition of claim 6, wherein said impact modifier (C) is ethylene/alkyl(meth)acrylate copolymer as shown in chemical formula 3: 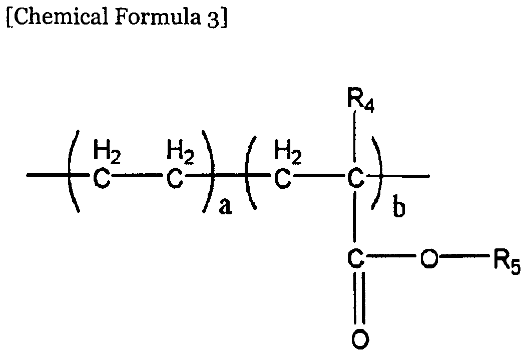
wherein R₄ is a hydrogen atom or a methyl group; R₅ is a C₁-C₁₂ alkyl group; a and b are the degree of polymerization, and a : b is 300 : 1 to 10 : 90.

11. The polycarbonate-polysiloxane resin composition of claim 1, further comprising an additive selected from the group consisting of flame retardants, flame retardant aids, lubricants, releasing agents, nucleating agents, antistatic agents, stabilizers, modifiers, inorganic fillers, pigments, dyes, and mixtures thereof.

12. A molded article produced from the polycarbonate-polysiloxane resin composition as defined in any one of Claims 1-11.

13. A method for preparing a polycarbonate-polysiloxane resin composition comprising: melt-blending a thermoplastic polycarbonate resin and an organic siloxane polymer having a primary amine group as shown in the following Chemical Formula 2; and
extruding the melt-blended mixture through a extruder: 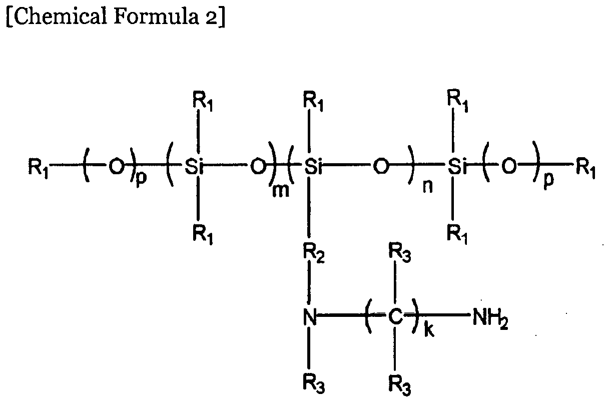
wherein R₁ is independently a hydrogen atom, a C₁₋₈ alkyl group, a C₆₋₃₀ aryl group, or a C₁₋₁₅ alkyl-substituted C₆₋₃₀ aryl group; R₂ is C₁₋₈ alkylene group; R₃ is independently a hydrogen atom, a C₁₋₈ alkyl group, a C₆₋₃₀ aryl group, or a C₁₋₁₅ alkyl-substituted C₆₋₃₀ aryl group; p is 0 or 1; k is an integer from of 1 to 5; m and n are repeating units and m : n is 99.9 : 0.1 to 50 : 50.

## Patentansprüche

1. Polycarbonat-Polysiloxan-Harzzusammensetzung mit hoher Schlagzähigkeit bei niedriger Temperatur und hoher mechanischer Festigkeit, umfassend:
(A) etwa 100 Gewichtsteile eines thermoplastischen Polycarbonatharzes; und
(B) 0,1∼30 Gewichtsteile eines organischen Siloxanpolymers mit einer primären Amingruppe.

2. Polycarbonat-Polysiloxan-Harzzusammensetzung nach Anspruch 1, wobei das organische Siloxanpolymer mit einer primären Amingruppe (B) durch die folgende chemische Formel 2 dargestellt ist: 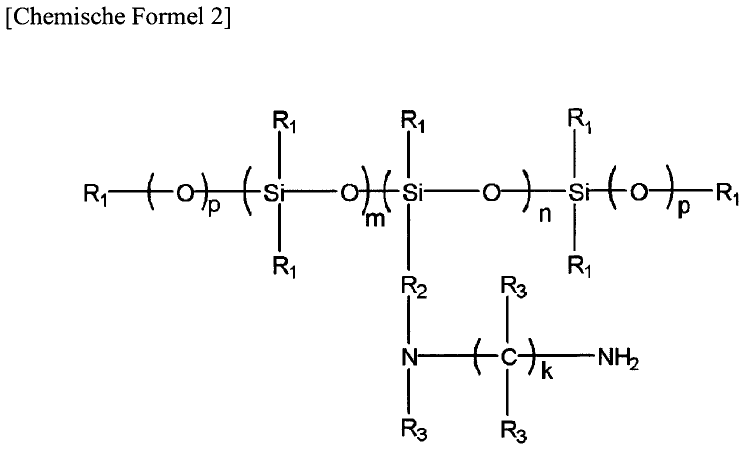
wobei R₁ unabhängig ein Wasserstoffatom, eine C₁₋₈-Alkylgruppe, eine C₆₋₃₀-Arylgruppe oder eine C₁₋₁₅-alkylsubstituierte C₆₋₃₀-Arylgruppe ist; R₂ eine C₁₋₈-Alkylengruppe ist; R₃ unabhängig ein Wasserstoffatom, eine C₁₋₈-Alkylgruppe, eine C₆₋₃₀-Arylgruppe oder eine C₁₋₁₅-alkylsubstituierte C₆₋₃₀-Arylgruppe ist; p 0 oder 1 ist; k eine ganze Zahl von 1 bis 5 ist; m und n Wiederholungseinheiten sind und m : n 99,9 : 0,1 bis 50 : 50 beträgt.

3. Polycarbonat-Polysiloxan-Harzzusammensetzung nach Anspruch 2, wobei R₁ und R₃ des organischen Siloxanpolymers mit einer primären Amingruppe (B) unabhängig ein Wasserstoffatom, Methyl, Ethyl, Propyl, Isopropyl, Butyl, sec-Butyl, t-Butyl, Isobutyl, Isoamyl oder t-Amyl sind und R₂ Methylen, Ethylen, Propylen, Isopropylen, Butylen, sec-Butylen oder t-Butylen ist.

4. Polycarbonat-Polysiloxan-Harzzusammensetzung nach Anspruch 2, wobei das Verhältnis von m zu n des organischen Siloxanpolymers mit einer primären Amingruppe 99,5 : 0,5 bis 55 : 45 beträgt.

5. Polycarbonat-Polysiloxan-Harzzusammensetzung nach Anspruch 1, wobei die Polycarbonat-Polysiloxan-Harzzusammensetzung eine gemäß ASTM D-256 unter Verwendung von 6,35 mm (1/4") dicken Testprobenstücken gemessene Schlagzähigkeit von etwa 343,2 N·cm/cm (35 kgf·cm/cm) oder mehr bei 23°C, eine gemäß ASTM D-256 unter Verwendung von 6,35 mm (1/4") dicken Testprobenstücken gemessene Schlagzähigkeit von etwa 176,5 N·cm/cm (18 kgf·cm/cm) oder mehr bei -20°C und etwa 147,1 N·cm/cm (15 kgf·cm/cm) oder mehr bei -30°C und ein gemäß ASTM D-790 unter Verwendung von 6,35 mm (1/4") dicken Testprobenstücken gemessenes Biegemodul von etwa 205.940 N/cm² (21.000 kgf/cm²) oder mehr aufweist.

6. Polycarbonat-Polysiloxan-Harzzusammensetzung nach Anspruch 1, des Weiteren umfassend etwa 10 oder weniger gewichtsteile des Schlagmodifikators (C).

7. Polycarbonat-Polysiloxan-Harzzusammensetzung nach Anspruch 6, wobei der Schlagmodifikator (C) ein Kern-Schale-Pfropfcopolymer ist, das durch Pfropfen des Kautschukpolymers mit einem Monomer, ausgewählt aus der Gruppe, bestehend aus einer aromatischen Vinylverbindung, einer Cyanidvinylverbindung, einem C₁-C₈-(Meth)acrylsäurealkylester, Maleinsäureanhydrid, Maleimid und Gemischen davon, hergestellt wird.

8. Polycarbonat-Polysiloxan-Harzzusammensetzung nach Anspruch 7, wobei das Kem-Schale-Pfropfcopolymer ein Pfropfcopolymer ist, das durch Pfropfcopolymerisieren von 5 bis 95 Gew.-% mindestens eines Monomers, ausgewählt aus der Gruppe, bestehend aus Styrol, α-Methylstyrol, halogen- oder C₁-C₈-alkylsubstituiertem Styrol, C₁-C₈-Methacrylsäurealkylester, C₁-C₈-Acrylsäurealkylester, Acrylnitril, Methacrylnitril, Maleinsäureanhydrid und C₁-C₄-alkyl- oder phenyl-N-substituiertem Maleimid und Gemischen davon, auf 5 bis 95 Gew.-% eines Kautschukpolymers, ausgewählt aus der Gruppe, bestehend aus Butadienkautschuk, Acrylkautschuk, Ethylen/Propylen-Kautschuk, Styrol/Butadien-Kautschuk, Acrylnitril/ButadienKautschuk, Isoprenkautschuk, Ethylen-Propylen-Dien-Terpolymer (EPDM), PolyOrganosiloxan/Polyalkyl(meth)acrylat-Kautschukkomplex und Gemischen davon, hergestellt wird.

9. Polycarbonat-Polysiloxan-Harzzusammensetzung nach Anspruch 8, wobei die Polycarbonat-Polysiloxan-Harzzusammensetzung eine gemäß ASTM D-256 unter Verwendung von 6,35 mm (1/4") dicken Testprobenstücken gemessene Schlagzähigkeit von etwa 686,5 N·cm/cm (70 kgf·cm/cm) oder mehr bei 23°C, eine gemäß ASTM D-256 unter Verwendung von 6,35 mm (1/4") dicken Testprobenstücken gemessene Schlagzähigkeit von etwa 539,4 N·cm/cm (55 kgf·cm/cm) oder mehr bei -20°C und etwa 333,4 N·cm/cm (34 kgf·cm/cm) oder mehr bei -30°C und ein gemäß ASTM D-790 unter Verwendung von 6,35 mm (1/4") dicken Testprobenstücken gemessenes Biegemodul von etwa 205.940 N/cm² (21.000 kgf/cm²) oder mehr aufweist.

10. Polycarbonat-Polysiloxan-Harzzusammensetzung nach Anspruch 6, wobei der Schlagmodifikator (C) wie in der chemischen Formel 3 dargestelltes Ethylen/Alkyl(meth)acrylatcopolymer ist: 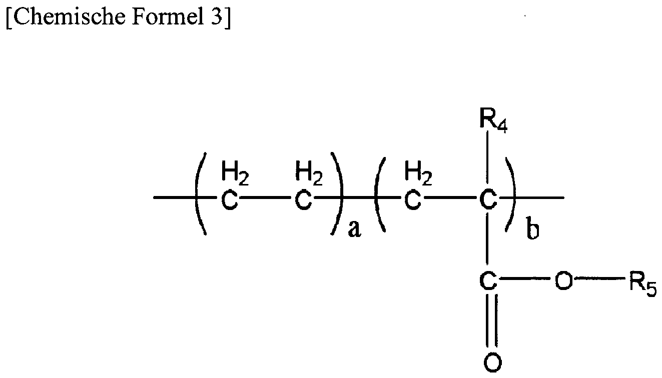
wobei R₄ ein Wasserstoffatom oder eine Methylgruppe ist; R₅ eine C₁-C₁₂-Alkylgruppe ist; a und b der Polymerisationsgrad sind und a : b 300 : 1 bis 10 : 90 beträgt.

11. Polycarbonat-Polysiloxan-Harzzusammensetzung nach Anspruch 1, des Weiteren umfassend einen Zusatz, ausgewählt aus der Gruppe, bestehend aus Flammhemmem, Flammhemmerhilfen, Schmiermitteln, Trennmitteln, Keimbildnern, Antistatikmitteln, Stabilisatoren, Modifikatoren, anorganischen Füllstoffen, Pigmenten, Farbstoffen und Gemischen davon.

12. Formgegenstand, der aus der wie in einem der Ansprüche 1-11 definierten Polycarbonat-Polysiloxan-Harzzusammensetzung hergestellt ist.

13. Verfahren zur Herstellung einer Polycarbonat-Polysiloxan-Harzzusammensetzung, umfassend:
Schmelzmischen eines thermoplastischen Polycarbonatharzes und eines wie in der folgenden chemischen Formel 2 dargestellten orgamischen Siloxanpolymers mit einer primären Amingruppe; und
Extrudieren des schmelzgemischten Gemischs durch einen Extruder: 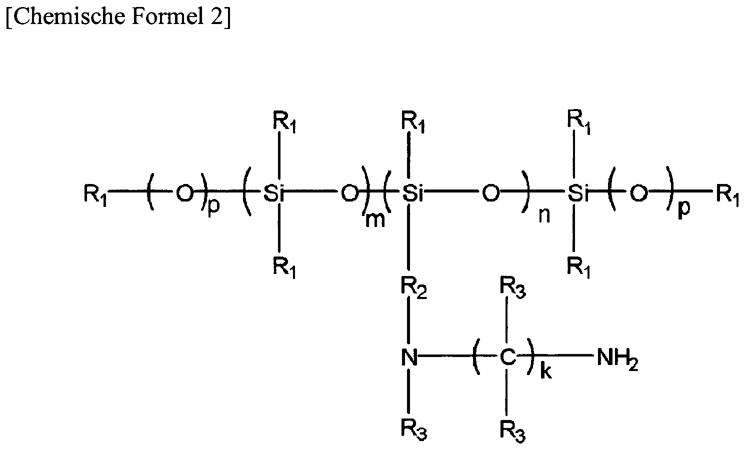
wobei R₁ unabhängig ein Wasserstoffatom, eine C₁₋₈-Alkylgruppe, eine C₆₋₃₀-Arylgruppe oder eine C₁₋₁₅-alkylsubstituierte C₆₋₃₀-Arylgruppe ist; R₂ eine C₁₋₈-Alkylengruppe ist; R₃ unabhängig ein Wasserstoffatom, eine C₁₋₈-Alkylgruppe, eine C₆₋₃₀-Arylgruppe oder eine C₁₋₁₁-alkylsubstituierte C₆₋₃₀-Arylgruppe ist; p 0 oder 1 ist; k eine ganze Zahl von 1 bis 5 ist; m und n Wiederholungseinheiten sind und m : n 99,9 : 0,1 bis 50 : 50 beträgt.

## Revendications

1. Composition de résines de polycarbonate et de polysiloxane, dotée d'une haute résistance au choc à basse température et d'une forte résistance mécanique, comprenant :
A) environ 100 parties en poids d'une résine de polycarbonate thermoplastique,
B) et de 0,1 à 30 parties en poids d'un polymère de type siloxane organique, portant un groupe amino primaire.

2. Composition de résines de polycarbonate et de polysiloxane, conforme à la revendication 1, dans laquelle ledit polymère de type siloxane organique (B) portant un groupe amino primaire est représenté par la formule chimique 2 donnée ci-dessous : 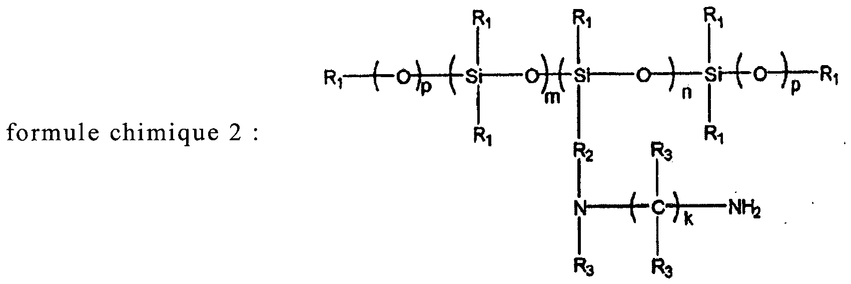 dans laquelle formule
- chaque symbole R₁ représente indépendamment un atome d'hydrogène, un groupe alkyle en C₁₋₈, un groupe aryle en C₆₋₃₀, ou un groupe aryle en C₆₋₃₀ à substituant(s) alkyle en C₁₋₁₅,
- R₂ représente un groupe alcanediyle en C₁₋₈,
- chaque symbole R₃ représente indépendamment un atome d'hydrogène, un groupe alkyle en C₁₋₈, un groupe aryle en C₆₋₃₀, ou un groupe aryle en C₆₋₃₀ à substituant(s) alkyle en C₁₋₁₅,
- les indices p valent 0 ou 1,
- l'indice k est un nombre entier valant de 1 à 5,
- et les indices m et n sont des nombres de motifs répétés, dont le rapport m/n vaut de 99,9/0,1 à 50/50.

3. Composition de résines de polycarbonate et de polysiloxane, conforme à la revendication 2, dans laquelle, dans ledit polymère de type siloxane organique (B) portant un groupe amino primaire, chacun des symboles R₁ et R₃ représente indépendamment un atome d'hydrogène ou un groupe méthyle, éthyle, propyle, isopropyle, butyle, secbutyle, tertiobutyle, isobutyle, isoamyle ou tertioamyle, et R₂ représente un groupe méthanediyle, éthanediyle, propanediyle, isopropanediyle, butanediyle, sec-butanediyle ou tertiobutanediyle.

4. Composition de résines de polycarbonate et de polysiloxane, conforme à la revendication 2, dans laquelle, dans ledit polymère de type siloxane organique portant un groupe amino primaire, le rapport m/n vaut de 99,5/0,5 à 55/45.

5. Composition de résines de polycarbonate et de polysiloxane, conforme à la revendication 1, laquelle composition de résines de polycarbonate et de polysiloxane présente une résistance au choc à 23 °C, mesurée selon la norme ASTM D-256 sur des échantillons épais de 6,35 mm (1/4 de pouce), valant au moins environ 343,2 N.cm/cm (35 kgf.cm/cm), des résistances au choc à -20 °C et à -30 °C, mesurées selon la norme ASTM D-256 sur des échantillons épais de 6,35 mm (1/4 de pouce), valant respectivement au moins environ 176,5 N.cm/cm (18 kgf.cm/cm) et au moins environ 147,1 N.cm/cm (15 kgf.cm/cm), et un module de flexion, mesuré selon la norme ASTM D-790 sur des échantillons épais de 6,35 mm (1/4 de pouce), valant au moins 205 940 N/cm² (21 000 kgf/cm²).

6. Composition de résines de polycarbonate et de polysiloxane, conforme à la revendication 1, comportant en outre au plus environ 10 parties en poids d'un agent de modification de la résistance au choc (composant C).

7. Composition de résines de polycarbonate et de polysiloxane, conforme à la revendication 6, dans laquelle ledit agent de modification de la résistance au choc (C) est un copolymère de greffage de type noyau-coque préparé par greffage, sur un polymère de type caoutchouc, d'un monomère choisi dans l'ensemble formé par les composés vinylaromatiques, les composés de type acrylonitrile, les composés de type acrylate ou méthacrylate d'alkyle en C₁-C₈, les composés de type anhydride maléique ou maléimide, et les mélanges de tels composés.

8. Composition de résines de polycarbonate et de polysiloxane, conforme à la revendication 7, dans laquelle ledit copolymère de greffage de type noyau-coque est un copolymère préparé par copolymérisation par greffage de 5 à 95 % en poids d'au moins un monomère, choisi dans l'ensemble formé par le styrène, l'α-méthyl-styrène, les dérivés de styrène à substituant(s) halogéno ou alkyle en C₁-C₈, les méthacrylates d'alkyle en C₁-C₈, les acrylates d'alkyle en C₁-C₈, l'acrylonitrile, le méthacrylonitrile, l'anhydride maléique, les dérivés de maléimide à substituant phényle ou alkyle en C₁-C₄ placé sur l'atome d'azote, et les mélanges de tels monomères, sur 5 à 95 % en poids d'un polymère de type caoutchouc, choisi dans l'ensemble formé par un caoutchouc de butadiène, un caoutchouc de composé acrylique, un caoutchouc d'éthylène/propylène, un caoutchouc de styrène/butadiène, un caoutchouc d'acrylonitrile/butadiène, un caoutchouc d'isoprène, un terpolymère d'éthylène-propylène-diène (EPDM), un caoutchouc complexe de polyorganosiloxane/poly(acrylate ou méthacrylate d'alkyle), et les mélanges de tels caoutchoucs.

9. Composition de résines de polycarbonate et de polysiloxane, conforme à la revendication 8, laquelle composition de résines de polycarbonate et de polysiloxane présente une résistance au choc à 23 °C, mesurée selon la norme ASTM D-256 sur des échantillons épais de 6,35 mm (1/4 de pouce), valant au moins environ 686,5 N.cm/cm (70 kgf.cm/cm), des résistances au choc à -20 °C et à -30 °C, mesurées selon la norme ASTM D-256 sur des échantillons épais de 6,35 mm (1/4 de pouce), valant respectivement au moins environ 539,4 N.cm/cm (55 kgf.cm/cm) et au moins environ 333,4 N.cm/cm (34 kgf.cm/cm), et un module de flexion, mesuré selon la norme ASTM D-790 sur des échantillons épais de 6,35 mm (1/4 de pouce), valant au moins 205 940 N/cm² (21 000 kgf/cm²).

10. Composition de résines de polycarbonate et de polysiloxane, conforme à la revendication 6, dans laquelle ledit agent de modification de la résistance au choc (C) est un copolymère d'éthylène et d'acrylate d'alkyle ou de méthacrylate d'alkyle, représenté par la formule chimique 3 donnée ci-dessous : 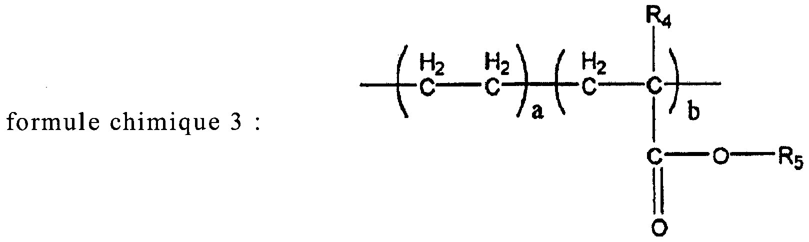 dans laquelle formule
- R₄ représente un atome d'hydrogène ou un groupe méthyle,
- R₅ représente un groupe alkyle en C₁₋₁₂,
- et les indices a et b sont des nombres indiquant les degrés de polymérisation, dont le rapport a/b vaut de 300/1 à 10/90.

11. Composition de résines de polycarbonate et de polysiloxane, conforme à la revendication 1, comprenant en outre un adjuvant choisi dans l'ensemble formé par les ignifugeants, auxiliaires d'ignifugeant, lubrifiants, agents de démoulage, agents de nucléation, agents anti-statiques, stabilisants, modificateurs, charges inorganiques, pigments et colorants, ainsi que les mélanges de tels adjuvants.

12. Pièce moulée produite à partir d'une composition de résines de polycarbonate et de polysiloxane, conforme à l'une des revendications 1 à 11.

13. Procédé de préparation d'une composition de résines de polycarbonate et de polysiloxane, lequel procédé comporte les étapes suivantes :
- mélanger à l'état fondu une résine de polycarbonate thermoplastique et un polymère de type siloxane organique portant un groupe amino primaire, représenté par la formule chimique 2 donnée ci-dessous,
- et extruder le mélange fondu ainsi obtenu, en le faisant passer dans une extrudeuse ; 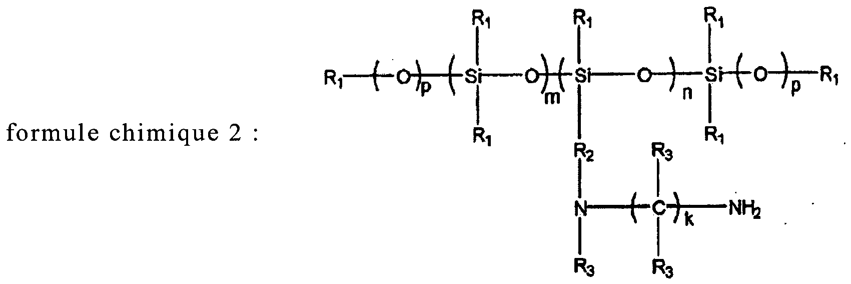 dans laquelle formule
- chaque symbole R₁ représente indépendamment un atome d'hydrogène, un groupe alkyle en C₁₋₈, un groupe aryle en C₆₋₃₀, ou un groupe aryle en C₆₋₃₀ à substituant(s) alkyle en C₁₋₁₅,
- R₂ représente un groupe alcanediyle en C₁₋₈,
- chaque symbole R₃ représente indépendamment un atome d'hydrogène, un groupe alkyle en C₁₋₈, un groupe aryle en C₆₋₃₀, ou un groupe aryle en C₆₋₃₀ à substituant(s) alkyle en C₁₋₁₅,
- les indices p valent 0 ou 1,
- l'indice k est un nombre entier valant de 1 à 5,
- et les indices m et n sont des nombres de motifs répétés, dont le rapport m/n vaut de 99,9/0,1 à 50/50.
